# EUROPEAN PATENT APPLICATION

(11) **EP 4 603 275 A1**
(43) Date of publication of application: **20.08.2025**
(21) Application number: 23905504.9
(22) Date of filing: 02.11.2023
(51) Int. Cl.: B32B 9/00, B32B 9/04, B32B 17/02, B32B 17/12, B32B 27/02, B32B 27/28, B32B 27/12, B32B 5/06, B32B 37/00, B32B 37/06, B32B 37/10, B32B 38/00

(54) **METHOD FOR PREPARING AEROGEL COMPOSITE FIBER NEEDLE-PUNCHED PRODUCT, AEROGEL COMPOSITE FIBER NEEDLE-PUNCHED PRODUCT AND USE THEREOF**

(30) Priority: 20.12.2022 CN 202211642828
(71) Applicant: IBIH Advanced Materials Co., Ltd., Cangzhou, Hebei 061108 (CN)
(72) Inventor: DONG, Haibing, Cangzhou, Hebei 061108 (CN); WANG, Yunhong, Cangzhou, Hebei 061108 (CN); TIAN, Lei, Cangzhou, Hebei 061108 (CN); WANG, Jianheng, Cangzhou, Hebei 061108 (CN)
(74) Representative: Petraz, Gilberto Luigi
(86) International application number: PCT/CN2023/129212
(87) International publication number: WO 2024/131334

(57) **Abstract**

The invention relates to the field of aerogel composite materials, and discloses a method for preparing an aerogel composite fiber needled product, an aerogel composite fiber needle-punched product and the use thereof. The method comprises: (1) increasing the weight of a hydrophobic aerogel material to obtain aerogel material I; (2) laying a fiber material into a net , then adding the aerogel material I onto the thin net so as to obtain an aerogel composite fiber material I; and laminating the aerogel composite fiber material I at least two times so as to obtain an aerogel composite fiber material II; and (3) successively pre-needle-punching, needle-punching and hot finishing the aerogel composite fiber material II to obtain an aerogel composite fiber needled product. The method for preparing an aerogel composite fiber needled product can greatly reduce the usage of a solvent, significantly increases the production efficiency of aerogel composite materials, and achieves continuous, automated and completely closed production of the aerogel composite materials.

## Description

### Cross Reference to Related Applications

The present application claims the benefit of Chinese patent application 202211642828.8, filed on 20/12/2022, the contents of which are incorporated herein by reference.

### Technical Field

The invention relates to the field of aerogel composite materials, in particular to method for preparing an aerogel composite fiber needled product, the aerogel composite fiber needle-punched product and the use thereof.

### Background

Aerogels have experienced slow development for nearly a hundred years since their appearance to date, but the basic technology has not made fundamental breakthrough. Although pure aerogel particles and powders have extremely low thermal conductivity and excellent thermal insulation properties, due to poor particle and powder molding, they have not been applied on a large scale.

In the beginning of the 21 st century, the industry has greatly improved mechanical properties of composite aerogel composite products by means of fiber reinforced aerogel, and has gradually been applied to the thermal insulation of industrial pipelines, equipment and all kinds of towers, the thermal insulation of interior and exterior walls of buildings, the fire insulation of new energy vehicles, and the fire insulation of power batteries.

Currently, there are two known methods of fiber-reinforced aerogels: firstly, by in-situ composite method, that is, at the front end of an aerogel preparation process, namely a sol-gel stage, integrally soaking and curing the sol by using a fiber flocculus with a disordered structure, and then extracting liquid in a wet gel structure by using a certain drying means to form the aerogel composite material with a nano-porous structure; secondly, preparing the prepared aerogel particles or powder into a suspension state in a post-compounding mode, filling the suspension state into fiber flocculus, and drying the fiber flocculus to form the aerogel composite material.

Among them, the in-situ composite method has the following defects: 1) the process flow is complex, only intermittent production can be realized, and continuous, automatic and large-scale production cannot be realized, so that the production efficiency is low; 2) a large amount of solvent is used in the preparation process, all the working procedures cannot be connected seamlessly, the phenomenon of disordered discharge of the solvent exists, and a certain degree of environmental pollution is caused; 3) the production system can not be completely closed, so that the recovery rate of the solvent is low, the waste is serious, and the production cost is increased.

Suspension filling post-compounding method has the following defects: 1) because a large amount of solid matters exist in the suspension, the solid matters cannot be uniformly diffused to pores of the flocculus after being injected into the fibrous flocculus, so that the aerogel is difficult to be uniformly distributed in the fibrous flocculus, and the non-uniform performance of the final product is easily caused; 2) there is a large amount of solvent in the suspension, the solvent recovery difficulty is high, and the recovery cost is increased.

CN113352709A discloses a production method of non-dusting aerogel felt, which is characterized by comprising the following steps: 1) loosening the fibers by using a loosening machine, then combing loosened fibers by using a carding machine, and spraying glue on the bottom surfaces of fibers laid on the bottom layer of the aerogel felt; 2) uniformly spraying a certain amount of silane coupling agent on the fiber; 3) further and evenly scattering silica aerogel powder on the fibers by adopting a powder scattering machine, and then sending the fibers into a continuous oven for reaction; 4) after the reaction is finished, lapping nets by a net lapping machine, and spraying glue on the top surface of fibers paved on the top layer of the aerogel felt; 5) adopting a needling machine to carry out needling reinforcement and forming on the net, then carrying out edge cutting by an edge cutting machine, and finally rolling by a rolling machine. Although the method has a simple process and can realize continuous production, the prepared product has low thermal conductivity, good heat preservation effect and firm structure and does not fall off powder. However, the drawbacks of this method are: the aerogel powder has very low density and light weight, if the weight is not increased, it will inevitably float in the air during the addition process, so that it is difficult to evenly add to the material; in addition, adding silane coupling agent directly to the fiber can not enhance the affinity between the aerogel powder and the fiber, and it is easy to cause the aerogel powder to fall off .

CN110846891A discloses a method for manufacturing aerogel composite fiber, which is characterized by comprising the following steps: (1) weighing the following raw materials according to the weight ratio: 1-500 parts of aerogel composite powder, 100-450 parts of fiber base material, 0-100 parts of additive and 0-1000 parts of solvent; (2) putting the weighed aerogel composite powder and the additive into a solvent, and continuously stirring at the temperature of 30-300 °C until uniform mixed glue is formed; and (3) the fiber substrate is drawn, uncoiled, and the mixed adhesive charge is compounded on it, and after it is dry, the coil can be recoiled and the production can be completed. Although the method can select a wide range of raw materials, lower cost, fewer and simple steps, the prepared product has good thermal insulation performance, high toughness and good wear resistance. However, the drawbacks of this method are: aerogel materials are only attached to the surface of the composite base material, and attachment amount is very limited, the composite material with good thermal insulation performance is difficult to obtain; in addition, since there is no control of the fiber network structure, the aerogel material attached to the surface is easily dropped after drying, thereby causing environmental pollution and resulting in loss of thermal insulation performance.

Therefore, it is necessary to provide a preparation method of aerogel composites that can overcome the above defects.

### Disclosure of Invention

The invention aims to overcome the defects of low production efficiency, high cost and non-uniform final product performance of the existing method for preparing the aerogel composite material.

In order to achieve the above aims, a first aspect of the present invention provides a method of preparing an aerogel composite fiber needle-punched product, the method comprises:
(1) After the hydrophobic aerogel material is subjected to weight gain treatment, an aerogel material I is obtained;
(2) After laying fiber material into a net, adding the aerogel material I to a thin net to obtain an aerogel composite fiber material I; controlling the addition conditions so that the content of aerogel material I per square meter of the thin net is 5-500 g; laminating the aerogel composite fiber material I for at least 2 times to obtain an aerogel composite fiber material II;
(3) The aerogel composite fiber material II is sequentially subjected to pre-needling, needling and thermal finishing forming to obtain an aerogel composite fiber needle-punched product;
wherein the fiber material is a thin net with a mass of 40-200g/m² per unit to be laid after fiber filament is chop, opened and carded in turn.

A second aspect of the present invention provides an aerogel composite fiber needle-punched product prepared from the method described in the preceding first aspect.

A third aspect of the present invention provides a use of the aerogel composite fiber needle-punched product described in the second aspect in thermal insulation, cold insulation, fire prevention, and noise reduction materials.

Compared with the prior art, the invention has at least the following advantages:
The method can greatly reduce the dosage of the solvent, greatly improve the production efficiency of the aerogel composite material, and realize the continuous, automatic and fully enclosed production of the aerogel composite material, and has the prospect of realizing large-scale industrialization; specifically:
The existing in-situ composite method needs to use a large amount of solvent, which makes the weight of the fiber material increase greatly, resulting in its deformation; meanwhile, the fiber material after weight gain takes more time to carry out the subsequent process, resulting in a significant reduction in production efficiency The invention adopts the method of combining the surface-wetting weight-gaining aerogel with the production process of the fiber needling product, can greatly reduce the dosage of the solvent and obviously shorten the time from the raw materials to the product.

### Detailed Description

The endpoints of the ranges and any values disclosed herein are not limited to the precise range or value, and these ranges or values shall be understood to encompass values adjacent to these ranges or values. For numerical ranges, each range between its endpoints and individual point values, and each individual point value can be combined with each other to give one or more new numerical ranges, and such numerical ranges should be construed as specifically disclosed herein.

In the present invention, the aerogel composite fiber material I and the aerogel composite fiber material II are different only in thickness, and the composition of both are the same.

As mentioned previously , a first aspect of the present invention provides a method of preparing an aerogel composite fiber needle-punched product, the method comprises:
(1) After the hydrophobic aerogel material is subjected to weight gain treatment, an aerogel material I is obtained;After laying fiber material into a net, adding the aerogel material I to a thin net to
obtain an aerogel composite fiber material I; controlling the addition conditions so that the content of aerogel material I per square meter of the thin net is 5-500 g; laminating the aerogel composite fiber material I for at least 2 times to obtain an aerogel composite fiber material II;
(3) The aerogel composite fiber material II is sequentially subjected to pre-needling, needling and thermal finishing forming to obtain an aerogel composite fiber needle-punched product;
wherein the fiber material is a thin net with a mass of 40-200g/m² per unit to be laid after fiber filament is chop, opened and carded in turn.

Preferably, in step (1), the unit area mass of the thin net to be laid is 80 to 120g/m². The inventors of the present invention have found that the aerogel composite fiber needle-punched product prepared in this preferred case has suitable volume-weight and mechanical properties.

The inventors of the present invention have also found that when the addition conditions are controlled so that the content of the aerogel material I per square meter of the thin net is 5 to 100g/m², the prepared aerogel composite fiber needle-punched product has a lower thermal conductivity and a lower rate of vibration loss.

According to a preferred embodiment, the operation of the weight gain treatment comprises the following steps: the hydrophobic aerogel material is contacted with a liquid substance and then subjected to liquid removal treatment.

It should be noted that the invention has no special restrictions on the method of the liquid removal treatment, and those skilled in the field can select the method according to the known prior art, as long as the volume-weight of the aerogel material I obtained after the liquid removal treatment is 100-200g/cm³, and the latter part of the present invention provides a preferred embodiment which should not be construed as a limitation of the present invention by those skilled in the field.

Preferably, the liquid substance contains a solvent and an additive, and the additive is selected from at least one of a silane coupling agent and a binder.

Preferably, in the liquid substance , the content of the silane coupling agent is 0.5 - 10 wt% and the content of the binder is 0.5 - 5 wt%.

Preferably, the solvent is selected from at least one of water, an organic solvent. More preferably, the organic solvent is selected from at least one straight chain mono alcohols of C1-C10.

Particularly preferably, the C1-C10 straight chain mono alcohol is selected from at least one of methanol, ethanol, n-propanol and n-butanol.

Preferably, the silane coupling agent is selected from at least one of γ-(methacryloyloxy) propyltrimethoxy-silane (KH570), γ- (2, 3-epoxy-propoxy) propyl trimethoxy-silane (KH560), γ-aminopropyl triethoxy-silane (KH550).

Preferably, the binder is selected from at least one of phenolic resin, acrylic resin, EVA resin, polyurethane resin, epoxy resin, water glass, and silica sol.

According to a particularly preferred embodiment, the solvent is water and the additive is a combination of a silane coupling agent and a binder. The inventor of the invention finds that under the preferable condition, the aerogel material and the fiber material are better combined and are not easy to fall off, so that the prepared product has a lower vibration loss rate. Meanwhile, the preferred embodiment has the advantages of low cost and environmental protection.

Preferably, the liquid substance is used in an amount such that, at the initial moment when the hydrophobic aerogel material is brought into contact with the liquid substance, the content of the hydrophobic aerogel material in the liquid phase material of the contact system is 1-50wt%

More preferably, the amount of the liquid substance is such that the content of the hydrophobic aerogel material in the liquid phase of the contact system is 5-20 wt% at the initial time of contact.

Preferably, the condition of the contacting at least satisfies: under the condition of stirring, the rotating speed of the stirring is 100-2000rpm, the temperature is 5-40 °C, the preferred temperature is 20-40 °C, and the time is 0.1-20 h.

Further preferably, the conditions of the contact are at least satisfied: carried out under stirring conditions, the rotation speed of the stirring is 200-1000rpm, the temperature is 20-40 °C, and the time is 0.5-2 h.

It should be noted that, there are no special restrictions in the invention on the method for chopping the fiber filaments, the opening, the carding and the thermal finishing forming, and those skilled in the field can select the method in combination with the technical means known in the field, and the following text of the present invention exemplarily provides a preferred embodiment, which should not be construed by a person skilled in the field as a limitation the present invention.

Preferably, the hydrophobic aerogel material is selected from at least one of a silica aerogel material, a metal oxide aerogel material, and an organic aerogel material.

More preferably, metal oxide in the metal oxide aerogel material is selected from at least one of alumina, copper oxide, zirconia, iron oxide, and zinc oxide; the organic aerogel material is selected from at least one of polyurethane aerogel materials, polyimide aerogel materials, polyurea aerogel materials, polypropylene aerogel materials, polyethylene aerogel materials, polycarbonate aerogel materials and cellulose aerogel materials.

Particularly preferably, the metal oxide aerogel material is selected from at least one of alumina aerogel materials, zirconia aerogel materials; the organic aerogel material is selected from at least one of a polyurethane aerogel material, a polyimide aerogel material and a polypropylene aerogel material.

Preferably, the fiber material is selected from at least one of glass fiber, ceramic fiber, alumina silicate fiber, basalt fiber, carbon fiber, polyacrylonitrile fiber, polyimide fiber, aramid fiber, polyester fiber, cotton fiber, nylon fiber, and pre-oxidized fiber.

Further preferably, the fiber material is selected from at least one of glass fiber, ceramic fiber, basalt fiber, polyimide fiber, aramid fiber, and polyester fiber.

Preferably, an average particle size of the hydrophobic aerogel material is 0.1-5000 µm. More preferably, the average particle size of the hydrophobic aerogel material is 20-1000 µm.

Through a great deal of creative research, the inventor of the invention finds that when the hydrophobic aerogel material is an alumina aerogel material with an average particle size is 20-500 µm, and the fiber material is a ceramic fiber, the prepared aerogel composite fiber needle-punched product has better high-temperature resistance.

The inventor of the invention also finds that when the hydrophobic aerogel material is a silicon dioxide aerogel material with an the average particle size is 20-500 µm, and the fiber material is polyimide fiber, the prepared aerogel composite fiber needle-punched product has better ultra-low temperature resistance.

According to a preferred embodiment, the step of pre-needling comprises:
performing single-sided needling on the aerogel composite material from top to bottom by adopting pre-needling equipment; wherein the condition of single-sided needling at least satisfies the following conditions: the needle is in shape of barb, and the needling density is 3-30 thorns/cm².

According to another preferred embodiment, the step of needling comprises:
performing double-sided needling on the pre-needled aerogel composite material by adopting needling equipment; wherein the condition of double-sided needling at least satisfies the following conditions: the needle is in shape of barb, and the needling density is 10-20 thorns/cm².

It should be noted that the present invention has no special limitation on the pre-needling equipment and the needling equipment, and those skilled in the field can make a choice based on the technical means known in the field, and the following text of the present invention exemplarily provides a preferred embodiment, and those skilled in the field should not be construed as a limitation of the present invention.

As mentioned previously, a second aspect of the present invention provides an aerogel composite fibre needle-punched product prepared by the method described in the preceding first aspect.

As mentioned previously, a third aspect of the present invention provides a use of the aerogel composite fiber needle-punched product described in the second aspect described above in thermal insulation, cold insulation, fire prevention, noise reduction material.

In the invention, the aerogel composite fiber needle-punched product can be used as thermal insulation, cold insulation, fire prevention and noise reduction materials in the fields of buildings, automobiles, batteries, industrial pipelines, equipment , etc.

Examples of the present invention are described in detail below.

In the following examples, the raw materials used are all commercially available unless otherwise specified.

In the present invention, the room temperature or the normal temperature means 25 ± 2 °C unless otherwise specified.

Hydrophobic aerogel material I: silicon dioxide aerogel material with an average particle size of 150 µm.

Hydrophobic aerogel material II: alumina aerogel material with an average particle size of is 200 µm.

Fiber material I: glass fibers.

Fiber material II: polyimide fiber.

Fiber material III: ceramic fibers.

Silane coupling agent: brand KH560.

Binder: phenolic resin.

### Example 1

(1) At room temperature, adding 100g of silane coupling agent into 10kg of deionized water, uniformly stirring, then adding 1kg of hydrophobic aerogel material I, stirring at the rotating speed of 800rpm for 1h, and then filtering to obtain aerogel material I with the volume-weight of 160g/cm³;
   wherein, the content of the hydrophobic aerogel material is 9.0 wt%, and the content of the silane coupling agent is 0.9 wt%;
(2) After chopping the fiber material I into short fibers (average diameter is 9 µm) with the length of 3 ± 0.5 cm, and then loosening by using loosening machine; then carding the obtained fiber staple by a carding machine to obtain a fiber material to be laid;
   laying the fiber material into a thin net with the width of 1m and the width of 60 ±10 g/m² by a net laying machine, then adding the aerogel material I onto the thin net, and laminating 20 layers to obtain an aerogel composite fiber material I;
   wherein the content of aerogel material I per square meter of the thin web is 20 ±2 g;
(3) The aerogel composite fiber material I was needled on a single-side from top to bottom by adopting pre-needling equipment to obtain an aerogel composite fiber material I1; then the aerogel composite fiber material I1 was needled on double-sided from top to bottom by adopting needling equipment to obtain an aerogel composite fiber material I2; finally, the aerogel composite fiber material I2 was shaped by hot pressing on both sides of the upper and lower sides using hot finishing equipment, and dried in a vacuum oven at 180 °C for 60min to obtain the aerogel composite fiber needle-punched product Z1;
   wherein, the conditions of single-sided needling are as follows: the needle is in a barb shape, and the needling density is 5 thorns/cm²;
   the conditions of double-sided needling are as follows: the needle is in a barb shape, and the needling density is 10 thorns/cm²;
   the conditions of the upper and lower double-sided hot pressing are as follows: the temperature is 200 °C, and the time is 3 min.

### Example 2

(1) At room temperature, adding 100g of silane coupling agent and 200g of phenolic resin into 10kg of deionized water, uniformly stirring, then adding 1kg of hydrophobic aerogel material I, stirring at the rotating speed of 800rpm for 1h, and then filtering to obtain aerogel material I with the volume-weight of 185g/cm³;
   wherein, the content of the hydrophobic aerogel material is 8.8wt%, the content of the silane coupling agent is 0.9wt%, and the content of the binder is 1.8 wt%;
(2) After chopping the fiber material I into short fibers (average diameter is 9 µm) with the length of 3 ± 0.5 cm, and then loosening by using loosening machine; then carding the obtained fiber staple by a carding machine to obtain a fiber material to be laid;
   laying the fiber material into a thin net with the width of 1m and the width of 60 ± 10 g/m² by a net laying machine, then adding the aerogel material I onto the thin net, and laminating 20 layers to obtain an aerogel composite fiber material I;
   wherein the content of aerogel material I per square meter of the thin web is 20 ± 2 g;
(3) The aerogel composite fiber material I was needled on a single-side from top to bottom by adopting pre-needling equipment to obtain an aerogel composite fiber material I1; thenthe aerogel composite fiber material I1 was needled on double-sided from top to bottom by adopting needling equipment to obtain an aerogel composite fiber material I2; finally, the aerogel composite fiber material I2 was shaped by hot pressing on both sides of the upper and lower sides using hot finishing equipment, and dried the shaped aerogel composite fiber material in a vacuum oven at 180 °C for 60min to obtain an aerogel composite fiber needle-punched product Z2;
   wherein, the conditions of single-sided needling are as follows: the needle is in a barb shape, and the needling density is 5 thorns /cm²;
   the conditions of double-sided needling are as follows: the needle is in a barb shape, and the needling density is 10 thorns /cm²;
   the conditions of the upper and lower double-sided hot pressing are as follows: the temperature is 200 °C, and the time is 3 min.

### Example 3

This example was carried out using a similar procedure to example 1, except that:
the content of aerogel material I per square meter of the thin net was increased to 40 ± 4g, and the other conditions were the same as example 1, and an aerogel composite fiber needle-punched product Z3 was prepared.

### Example 4

This example was carried out using a similar procedure to example 2, except that:
the content of aerogel material I per square meter of the thin net was increased to 40 ± 4g, and the other conditions were the same as example 2, and an aerogel composite fiber needle-punched product Z4 was prepared.

### Example 5

This example was carried out using a similar procedure to example 1, except that:
the fiber material I with the same weight was replaced by the fiber material II, and the other conditions were the same as example 1, and an aerogel composite fiber needle-punched product Z5 was prepared.

### Example 6

This example was carried out using a similar procedure to example 1, except that:
the aerogel material I with the same weight was replaced by aerogel material II, and the fiber material I with the same weight was replaced by fiber material III, the other conditions were the same as example 1, and an aerogel composite fiber needle-punched product Z6 was prepared.

### Example 7

This example was carried out using a similar procedure to example 1, except that:
the aerogel material I with the same weight was replaced by aerogel material II, the other conditions were the same as example 1, and an aerogel composite fiber needle-punched product Z7 was prepared.

### Example 8

This example was carried out using a similar procedure to example 1, except that:
the unit area mass of the thin net to be laid was 120g/m², the other conditions were the same as example 1, and an aerogel composite fiber needle-punched product Z8 was prepared.

### Example 9

This example was carried out using a similar procedure to example 1, except that:
the content of aerogel material I per square meter of the thin net was 100 ± 10 g, and the other conditions were the same as example 1, and an aerogel composite fiber needle-punched product Z9 was prepared.

### Example 10

This example was carried out using a similar procedure to example 1, except that:
the filtration conditions were controlled to obtain aerogel material I with a bulk density of 210g/cm³, and other conditions were the same as example 1, and an aerogel composite fiber needle-punched product Z10 was prepared.

### Example 11

This example was carried out using a similar procedure to example 1, except that:
in step (1), at room temperature, 100g silane coupling agent is added to a solvent (5 kg deionized water and 5kg ethanol) to be mixed, uniformly stirring, then 1kg hydrophobic aerogel material I is added, stirred at 800rpm for 1 h and then filtered to obtain an aerogel material I, and other conditions were the same as example 1, and an aerogel composite fiber needle-punched product Z11 was prepared.

### Comparative example 1

This comparative example was carried out using a similar procedure to example 1, except that:
After laminating the thin net for 20 times, then needling, adding an aerogel material I, and other conditions were the same as example 1, and an aerogel composite fiber needle-punched product DZ1 was prepared.

### Comparative example 2

This example was carried out using a similar procedure to example 1, except that:
the unit area mass of the thin net to be laid was 30g/m², and other conditions were the same as example 1, and an aerogel composite fiber needle-punched product DZ2 was prepared.

### Comparative example 3

This comparative example was carried out using a similar procedure to example 1, except that:
the content of aerogel material I t per square meter of the thin was 3g/m², and other conditions were the same as example 1, and an aerogel composite fiber needle-punched product DZ3 was prepared.

### Comparative example 4

This comparative example was carried out in a similar manner to example 1, except that:
adding a silane coupling agent and a hydrophobic aerogel material to a thin net in sequence, namely, not contacting the silane coupling agent and the hydrophobic aerogel material in the presence of a solvent and then performing liquid removal treatment, other conditions were the same as example 1, and an aerogel composite fiber needle-punched product DZ4 was prepared.

### Test example

The aerogel composite fiber needle-punched products prepared in the examples and the comparative examples were subjected to performance tests, and specifically as follows:
The aerogel composite fiber needle-punched product were randomly cut into three samples of 30×30cm, each of which was tested for tensile strength, thermal conductivity at 25°C, thermal conductivity at 300°C, combustion grade and vibration loss rate. The test results are shown in Table 1.
(1) Tensile strength: the determination was carried out according to the method in GB/T17911-2006.
(2) Thermal conductivity at 25 °C: the determination was carried out according to the method in GB/T10295-2008.
(3) Thermal conductivity at 300 °C of: the determination was carried out according to the method in GB/T10294-2008.
(4) Thermal conductivity at -200 °C: the assay was performed according to the method described in GB/T34336-2017.
(5) Combustion grade: the assay was carried out according to the method in GB 8624-2012.
(6) Vibration loss rate: the determination and assessment were carried out according to the method described in GB/T34336-2017.

**TABLE 1**

| Example numbering | Tensile strength (MPa) | Thermal conductivity (W/(m.K)) | | | Combustion grade | Vibration loss rate (%) |
|---|---|---|---|---|---|---|
| | | 25°C | 300°C | -200°C | | |
| Example 1 | 0.85×10³ | 0.021 | 0.036 | 0.0105 | A | 0.90 |
| Example 2 | 1.10×10³ | 0.022 | 0.036 | - | A | 0.50 |
| Example 3 | 0.91×10³ | 0.019 | 0.033 | - | A | 0.78 |
| Example 4 | 1.15×10³ | 0.020 | 0.034 | - | A | 0.52 |
| Example 5 | 1.18×10³ | 0.018 | - | 0.0081 | B | 0.75 |
| Example 6 | 0.52×10³ | 0.025 | 0.030 | - | A | 0.12 |
| Example 7 | 0.95×10³ | 0.025 | 0.032 | - | A | 0.091 |
| Example 8 | 1.12×10³ | 0.023 | 0.038 | - | A | 0.075 |
| Example 9 | 0.85×10³ | 0.018 | 0.033 | - | B | 0.12 |
| Example 10 | 0.75×10³ | 0.021 | 0.036 | 0.010 | A | 0.95 |
| Example 11 | 0.85×10³ | 0.023 | 0.037 | - | B | 0.09 |
| Comparative example 1 | 0.70×10³ | 0.040 | 0.058 | - | A | 0.95 |
| Comparative example 2 | 0.35x 10³ | 0.030 | 0.040 | - | A | 1.80 |
| Comparative example 3 | 0.86×10³ | 0.038 | 0.056 | - | A | 0.20 |
| Comparative example 4 | 0.88×10³ | 0.025 | 0.040 | - | A | 5.5 |

| | | | | | | |
|---|---|---|---|---|---|---|
| Note: wherein "-" means that no detection was performed. | | | | | | |

It can be seen from the results in Table 1 that the key performance parameters of the aerogel composite fiber needle-punched product prepared by the method can meet the requirements of GB/T34336-2017, and except that the products obtained by adopting the ceramic fiber have poor tensile strength and high vibration loss rate due to the mechanical property defects of the ceramic fiber itself.

By comparing the data of example 1 and example 2 that, it can be seen that the tensile strength and the vibration loss rate of the prepared aerogel composite fiber needle-punched product are significantly improved when the liquid substance contains a certain amount of binder.; by comparing the data of example 1 and example3 and by comparing example 2 and example 4, it can be seen that the thermal conductivity of the aerogel composite fiber needle-punched product prepared is significantly improved when the content of aerogel material I is increased during mesh laying.

The preferred embodiments of the present invention have been described above in detail, but the present invention is not limited thereto. Within the scope of the technical idea of the invention, many simple modifications can be made to the technical solution of the invention, including various technical features being combined in any other suitable way, and these simple modifications and combinations should also be regarded as the disclosure of the invention, and all fall within the scope of the invention.

## Claims

1. A method of preparing an aerogel composite fiber needle-punched product, wherein the method comprises:
(1) After the hydrophobic aerogel material is subjected to weight gain treatment, an aerogel material I is obtained;
(2) After laying fiber material into a net, adding the aerogel material I to a thin net to obtain an aerogel composite fiber material I; controlling the addition conditions so that the content of aerogel material I per square meter of the thin net is 5-500 g; laminating the aerogel composite fiber material I for at least 2 times to obtain an aerogel composite fiber material II;
(3) The aerogel composite fiber material II is sequentially subjected to pre-needling, needling and thermal finishing forming to obtain an aerogel composite fiber needle-punched product;
wherein the fiber material is a thin net with a mass of 40-200g/ m² per unit to be laid after fiber filament is chop, opened and carded in turn.

2. The method according to claim 1, wherein, in step (1), the operation of the weight gain treatment comprises the following step : the hydrophobic aerogel material is contacted with a liquid material and then subjected to liquid removal treatment.

3. The method according to claim 2, wherein, in step (1), the liquid substance contains a solvent and an additive, and the additive is selected from at least one of a silane coupling agent and a binder; and/or,
in step (1), in the liquid substance , the content of the silane coupling agent is 0.5-10 wt%; and/or,
in step (1), in the liquid substance, the content of the binder is 0.5-5 wt%;
and/or, in step (1), in the liquid substance, the solvent is water, the additive is a combination of a silane coupling agent and a binder.

4. A method according to claim 2 or 3, wherein, in step (1), the liquid substance is used in an amount such that, at the initial moment when the hydrophobic aerogel material is brought into contact with the liquid substance, the content of the hydrophobic aerogel material in the liquid phase material of the contact system is 1-50 wt%.

5. The method according to any one of claims 2-4, wherein, in step (1), the condition of the contacting at least satisfies: under the condition of stirring, the rotating speed of the stirring is 100-2000rpm, the temperature is 5-40 °C, the preferred temperature is 20-40 °C, and the time is 0.1-20 h.

6. The method according to any one of claims 2-5, wherein, in step (1), in the liquid substance, the silane coupling agent is selected from at least one of γ-(methacryloyloxy) propyltrimethoxy-silane, γ- (2, 3-epoxy-propoxy) propyltrimethoxy-silane, γ-aminopropyltriethoxy-silane; and/or,
in step (1), in the liquid substance, the binder is selected from at least one of phenolic resin, acrylic resin, EVA resin, polyurethane resin, epoxy resin, water glass, and silica sol.

7. The method according to any one of claims 1-6, wherein, in step (1), the hydrophobic aerogel material is selected from at least one of a silica aerogel material, a metal oxide aerogel material, and an organic aerogel material; and/or the presence of a gas in the atmosphere,
in step (1), the metal oxide in the metal oxide aerogel material is selected from at least one of alumina, copper oxide, zirconia, iron oxide and zinc oxide; the organic aerogel material is selected from at least one of polyurethane aerogel materials, polyimide aerogel materials, polyurea aerogel materials, polypropylene aerogel materials, polyethylene aerogel materials, polycarbonate aerogel materials and cellulose aerogel materials.

8. The method according to any one of claims 1-7, wherein, in step (1), an average particle size of the hydrophobic aerogel material is 0.1-5000 µm; preferably 20-1000 µm.

9. An aerogel composite fiber needle-punched product prepared by the method described in any one of claims 1-8.

10. Use of the aerogel composite fiber needle-punched product described in claim 9 in thermal insulation, cold insulation, fire protection, noise reduction materials.
